# EUROPÄISCHE PATENTSCHRIFT

(11) **EP 0 833 757 B1**
(45) Veröffentlichungstag und Bekanntmachung des Hinweises auf die Patenterteilung: **14.04.1999**
(21) Anmeldenummer: 95937050.3
(22) Anmeldetag: 05.11.1995
(51) Int. Cl.: B60J 10/10, B60J 10/06

(54) **VERFAHREN ZUR HERSTELLUNG EINES DICHTUNGSPROFILS FÜR EIN FALTVERDECK EINES KABRIOLETTS UND DICHTUNGSPROFIL**
METHOD OF PRODUCING A PROFILED SEAL FOR A CABRIOLET HOOD, AND PROFILED SEAL
PROCEDE DE PRODUCTION D'UN PROFILE D'ETANCHEITE POUR LE TOIT DECAPOTABLE D'UN CABRIOLET ET PROFILE D'ETANCHEITE OBTENU

(30) Priorität: 19.06.1995 DE 19522085
(43) Veröffentlichungstag der Anmeldung: 08.04.1998
(73) Patentinhaber: METEOR GUMMIWERKE K.H. BÄDJE GMBH & CO., 31167 Bockenem (DE)
(72) Erfinder: BORMANN, Josef, D-31177 Harsum (DE); ANDERS, Jens, D-31094 Marienhagen (DE); HILL, Alistair, D-31139 Hildesheim (DE)
(74) Vertreter: Kosel, Peter, Dipl.-Ing.
(86) Internationale Anmeldenummer: EP9504338
(87) Internationale Veröffentlichungsnummer: WO9700180

(56) Entgegenhaltungen:
- EP-A- 0 412 782
- EP-A- 0 587 428
- EP-A- 0 654 372

## Beschreibung

Die Erfindung betrifft ein Verfahren nach dem Oberbegriff des Anspruchs 1 oder 2 und ein Dichtungsprofil nach dem Oberbegriff des Anspruchs 3.

Bei einem bekannten Verfahren dieser Art (EP 0 654 372 A1) besteht die Trägerschiene aus Blech. An die Trägerschiene ist ein Elastomerprofilstrang angeformt. Soweit eine dreidimensionale Verformung des fertigen Dichtungsprofils erforderlich ist, wird diese offenbar durch Streckbiegen vorgenommen. In einer Basis des Dichtungsprofils sind Durchbrechungen vorgesehen, die allseitig Spiel zu dem Gewindebolzen eines Befestigungselements aufweisen. Jedes Befestigungselement greift in eine Gewindebohrung eines Anschlußteils des Faltverdecks ein und stützt sich über eine Unterlegscheibe an der Basis ab.

Aus der EP 0 412 782 A2 ist es an sich bekannt, die Trägerschiene aus Blech herzustellen, in eine Armierung eines Klemmprofils zu erstrecken und weitgehend mit einem Elastomerprofilstrang zu umformen. Auch hier erfolgt eine dreidimensionale Verformung des fertigen Dichtungsprofils samt seinem Klemmprofil durch Streckbiegen.

Aus der EP 0 587 428 A1 ist es an sich bekannt, das Dichtungsprofil aus einem verhältnismäßig steifen Montageprofil, z.B. einen Polyurethan einer Shore A-Härte von 85 bis 100, und einem weicheren Dichtstrang, z.B. aus einem Polyurethan einer Shore A-Härte von 60 bis 80, zu koextrudieren.

Aus der DE 43 20 330 A1 (siehe auch EP-A-0 618 101) ist es an sich bekannt, die Trägerschiene aus Metall oder Kunststoff herzustellen und daran einen Elastomerprofilstrang anzuformen. Da der obere Rand der Seitenscheibe geradlinig verläuft, ist hier eine dreidimensionale Verformung des fertigen Dichtungsprofils nicht erforderlich.

Bei einem anderen an sich bekannten Verfahren wird die Trägerschiene vorzugsweise aus Aluminium stranggepreßt, abgelängt und in die gewünschte, dreidimensionale Form aufwendig streckgebogen. Der Elastomerprofilstrang wird gesondert von der Trägerschiene extrudiert, abgelängt und von Hand an Aufnahmeprofilen der Trägerschiene lösbar verankert, nachdem die Trägerschiene mit Befestigungselementen an Anschlußteilen des Faltverdecks befestigt wurde. Die Querschnittsgestaltung und Montage der Trägerschiene und des Elastomerprofilstrangs sind kompliziert und kostenintensiv. Wenn das Dichtungsprofil nicht sofort optimal an den Anschlußteilen sitzt, muß eine relative Einstellung erfolgen. Dazu muß der Elastomerprofilstrang von der Trägerschiene gelöst und nach den Einstellarbeiten wieder an der Trägerschiene verankert werden. Auch dieser, ggf. mehrmals zu wiederholende Vorgang ist zeit- und kostenaufwendig.

Der Erfindung liegt die Aufgabe zugrunde, die Herstellung des Dichtungsprofils sowie das Dichtungsprofil selbst und seine Montage zu vereinfachen und zu verbilligen.

Diese Aufgabe ist hinsichtlich des Verfahrens durch die Merkmale des Anspruchs 1 gelöst. Diese Machart erübrigt das Streckbiegen und führt dennoch zu sehr genauer Formgebung des Dichtungsprofils.

Die zuvor erwähnte Aufgabe ist hinsichtlich des Verfahrens auch durch die Merkmale des Anspruchs 2 gelöst. So erzielt man eine besondere Montagevereinfachung für das Dichtungsprofil. Das Dichtungsprofil bildet mit seinen Gewindebolzen eine feste Baueinheit. Auf die Gewindebolzen können vor der Montage und auch während der Montage auf besonders einfache Weise Ausgleichsscheiben gesteckt werden, die eine Justage des Dichtungsprofils in der Längsrichtung der Gewindebolzen mit sich bringen. Das Hindurchstecken der Gewindebolzen durch die Durchbrechungen des Anschlußteils ist einfach und schnell zu bewerkstelligen. Die Gewindebolzen haben vorzugsweise allseitiges radiales Spiel gegenüber der Durchbrechung des Anschlußteils, so daß hier eine bezüglich der Gewindebolzen radiale Einstellung der Abschnitte erfolgen kann. Die Festlegung der Gewindebolzen relativ zu dem Anschlußteil geschieht zweckmäßigerweise, indem auf das freie Ende des Gewindebolzens zunächst eine Scheibe gesteckt und dann eine Mutter geschraubt wird. Die Verschraubung geschieht also nur noch von der Außenseite des Dichtungsprofils. Dies erleichtert einerseits die Montage und andererseits die genaue Justage des Dichtungsprofils an dem Anschlußteil.

Die zuvor erwähnte Aufgabe ist hinsichtlich des Dichtungsprofils durch die Merkmale des Anspruchs 3 gelöst. Die integrierte Trägerschiene ist kostengünstig und formgenau herzustellen, sowie einfach zu handhaben, zu montieren und gegebenenfalls relativ zu dem Faltverdeck einzustellen. Die Merkmale des Anspruchs 3 führen zu einer einwandfreien Abdichtung des Faltverdecks einerseits vorne gegenüber einem Windschutzprofil des Kabrioletts und andererseits hinten an einem sogenannten Spannbügel des Faltverdecks gegenüber einem Verdeckkasten des Kabrioletts.

Der wenigstens eine zweite Elastomerprofilstrang gemäß Anspruch 4 ist zweckmäßigerweise schlauchartig ausgebildet und führt zu einer besonders guten Abdichtung der Gegenfläche.

Die Trägerschiene gemäß Anspruch 5 ist kostengünstig und bei ausreichender Festigkeit leicht zu verformen.

Gemäß Anspruch 6 läßt sich die vorgefertigte Trägerschiene aus einem thermoplastischen Kunststoff kostengünstig zusammen mit dem wenigstens einen Elastomerprofilstrang koextrudieren.

Das Dichtungsprofil gemäß Anspruch 7 zeichnet sich durch hohe Formgenauigkeit aus.

Durch die Merkmale des Anspruchs 8 ergeben sich die schon im Zusammenhang mit Anspruch 2 geltend gemachten Vorteile.

Gemäß Anspruch 9 kann man auch bei recht dünnen Trägerschienen, z.B. einem VA-Blech von 0,6 mm Dicke, erreichen, daß der Kopf im wesentlichen bündig mit einer Innenfläche der Trägerschiene liegt. Die Montage der Gewindebolzen kann dadurch erfolgen, daß jeder Gewindebolzen in seine Durchbrechung der Trägerschiene gesteckt und in der Durchbrechung durch axiale Kraftanwendung auf den Gewindebolzen festgelegt wird.

Durch die Merkmale des Anspruchs 10 ist der Gewindebolzen besonders drehsicher in der Trägerschiene gehalten.

Gemäß Anspruch 11 ergibt sich eine besonders gut definierte axiale Endstellung für den Gewindebolzen.

Die Merkmale des Anspruchs 12 dienen einer besonders guten Drehsicherung des Gewindebolzens in seiner Durchbrechung der Trägerschiene.

Gleiches gilt für die Merkmale des Anspruchs 13.

Auch die Merkmale des Anspruchs 14 erhöhen den festen Sitz der Gewindebolzen in der Trägerschiene, zumal, wenn diese aus Blech besteht.

Die Trägerschiene gemäß Anspruch 15 kann aus Blech oder Kunststoff bestehen. In beiden Fällen erhält man eine sichere Verbindung des Gewindebolzens mit der Trägerschiene.

Der Gewindebolzen gemäß Anspruch 16 kann z.B. aus Polyamid bestehen.

Der Gewindebolzen gemäß Anspruch 17 kann z.B. aus korrosionsgeschütztem oder nichtrostendem Stahl oder aus Aluminium bestehen.

Gemäß Anspruch 18 kann das Dichtungsprofil auch als vollständig geschlossener Schlauch ausgebildet sein, weil man die Gewindebolzen nicht mehr vom Inneren des Dichtungsprofils in die Durchbrechungen der Trägerschiene stecken muß.

Die Gewindebolzen werden vorzugsweise durch Stumpfschweißung mit der Trägerschiene verbunden.

Diese und weitere Merkmale und Vorteile der Erfindung werden nachfolgend anhand der in den Zeichnungen dargestellten Ausführungsbeispiele näher erläutert. Es zeigt:
Fig. 1 eine perspektivische, schematische Ansicht des oberen Teils eines Kabrioletts,
Fig. 2 die Schnittansicht nach Linie II-II in Fig. 1 in vergrößerter Darstellung,
Fig. 3 die Schnittansicht nach Linie III-III in Fig. 1 in vergrößerter Darstellung,
Fig. 4 die Schnittansicht nach Linie IV-IV in Fig. 1 in vergrößerter Darstellung,
Fig. 5 die Schnittansicht nach Linie V-V in Fig. 1 in vergrößerter Darstellung,
Fig. 6 eine der Fig. 2 entsprechende Schnittansicht durch eine andere Ausführungsform der Erfindung,
Fig. 7 eine der Fig. 3 entsprechende Schnittansicht durch eine wiederum andere Ausführungsform der Erfindung,
Fig. 8 einen Längsschnitt durch ein besonderes Befestigungselement und
Fig. 9 bis 14 jeweils einen Längsschnitt durch einen Teil anderer Befestigungselemente.

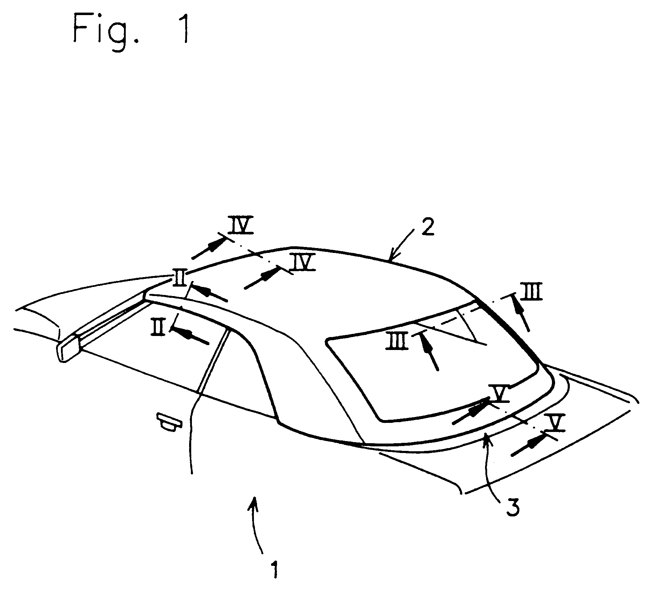

Fig. 1 zeigt ein Kabriolett 1 mit einem geschlossenen Faltverdeck 2, das in an sich bekannter Weise in einem Verdeckkasten 3 versenkt werden kann.

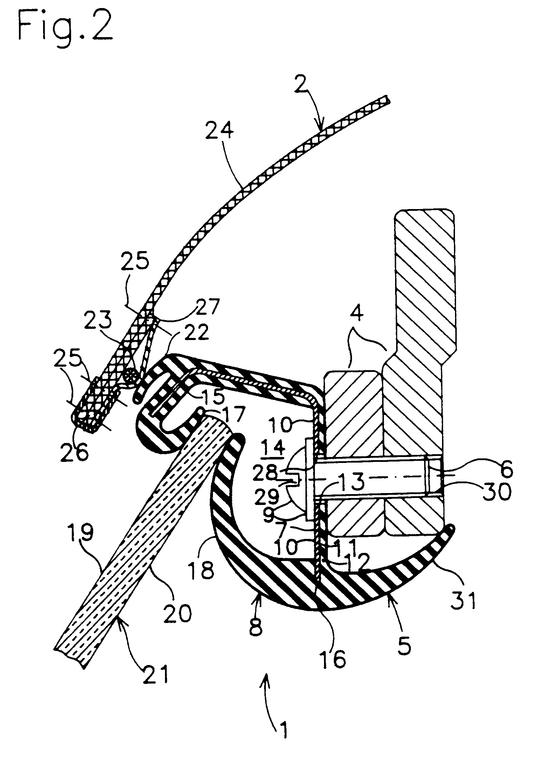

Gemäß Fig. 2 ist an einem Dachlenker 4 des Faltverdecks 2 ein Dichtungsprofil 5 mit hier als Karosserieschrauben ausgebildeten Befestigungselementen 6 befestigt. Das Dichtungsprofil 5 weist eine formstabile Trägerschiene 7 auf, die z.B. aus 0,4 bis 0,6 mm dickem, nicht rostendem VA-Blech besteht. Solches Blech läßt sich auf einer Rollenbiegemaschine verhältnismäßig einfach in die in Fig. 2 gezeigte Querschnittsform verformen.

Die Trägerschiene 7 ist auf dem größten Teil ihres Umfangs mit einem Elastomerprofilstrang 8 umspritzt. Die Trägerschiene 7 ist lediglich in einem Köpfen 9 der Befestigungselemente 6 gegenüberliegenden Umfangsteil 10 von Elastomer freigelassen. Dagegen ist ein von den Köpfen 9 der Befestigungselemente 6 abgewandter Umfangsteil 11 der Trägerschiene 7 mit einer Elastomerschicht 12 versehen, die im Bereich jedes Befestigungselements 6 eine Durchbrechung 13 aufweist.

In eine konkave Seite 14 des Dichtungsprofils 5 ragt jeweils von einem Schenkel 15 und 16 der Trägerschiene 7 eine Dichtlippe 17 und 18 des Elastomerprofilstrangs 8 hinein. Der Elastomerprofilstrang 8 kann z.B. aus Weichgummi mit einer Härte von 50 bis 70 Shore A hergestellt sein.

Jede Dichtlippe 17, 18 wirkt mit einer Seitenfläche 19 und 20 einer Seitenscheibe 21 des Kabrioletts 1 (Fig. 1) zusammen. Die Dichtlippen 17, 18 können zur Herabsetzung der Gleitreibungskräfte jeweils im Eingriffsbereich mit der Seitenscheibe 21 z.B. beflockt oder mit Gleitlack überzogen sein.

Auf der von der Dichtlippe 17 abgewandten Seite ist an das Dichtungsprofil 5 außerhalb des Schenkels 15 eine weitere Dichtlippe 22 angeformt, an die bei geschlossenem Faltverdeck 2 in an sich bekannter Weise mittels eines Spannseils 23 ein unterer Rand des Faltverdecks abdichtend angepreßt wird. Eine Dachplane 24 ist am unteren Rand nach innen umgeschlagen und durch Nähte 25 einerseits mit sich und andererseits mit einem Kantenschutz 26 und einer Halterung 27 für das Spannseil 23 vernäht.

Zur Herstellung des Dichtungsprofils 5 geht man wie folgt vor:

Die Trägerschiene 7 wird, ausgehend von einem ebenen Blechband, zu ihrer im wesentlichen endgültigen Querschnittsform gemäß Fig. 2 vorzugsweise durch eine Rollenbiegemaschine verformt. Anschließend wird die Trägerschiene 7 in einen nicht gezeigten Mehrkomponentenspritzkopf eines Extruders eingespeist, in dem die Trägerschiene 7 auf dem größten Teil ihres Umfangs, mit Ausnahme des Umfangsteils 10, mit dem Elastomerprofilstrang 8 umspritzt wird. Das Dichtungsprofil 5 wird nach dem Verlassen des Mehrkomponentenspritzkopfes vernetzt, gekühlt und in Abschnitte abgelängt. Jeder Abschnitt wird zur Herstellung seiner dreidimensionalen Formgebung streckgebogen. Danach werden in der üblichen Weise die axialen Enden des Dichtungsprofils 5 abgetrennt und die Enden des Dichtungsprofils 5 durch Abschlußkappen o.dgl. konfektioniert.

In diesem vorgeformten und vorgefertigten Zustand wird das Dichtungsprofil 5 an das Montageband geliefert, auf dem die Kabrioletts 1 hergestellt werden. Der Monteur führt sodann die Befestigungselemente 6 zwischen den Dichtlippen 17, 18 hindurch in die konkave Seite 14 des Dichtungsprofils 5 ein und durch Durchbrechungen 28 in der Trägerschiene 7 und die damit fluchtenden Durchbrechungen 13 in der Elastomerschicht 12 hindurch. Sodann wird ein Schraubendreher zwischen den Dichtlippen 17, 18 hindurch in einen Schlitz 29 des Kopfes 9 eingeführt und das Befestigungselement 6 in eine Gewindebohrung 30 des Dachlenkers 4 eingedreht. Die Durchbrechungen 13, 28 weisen ausreichendes allseitiges Spiel gegenüber dem Befestigungselement 6 auf, so daß das Dichtungsprofil 5 bezüglich des Dachlenkers 4 in jeder Richtung optimal eingestellt und justiert werden kann, bevor die Befestigungselemente 6 endgültig festgezogen werden.

Eine eventuell erforderliche Nachjustage des Dichtungsprofils 5 ist mit äußerst geringem Aufwand möglich, weil dazu lediglich die Befestigungselemente 6 in den erforderlichen Bereichen des Dichtungsprofils 5 wieder gelöst, das Dichtungsprofil 5 nachjustiert und die Befestigungsselemente 6 wieder festgezogen werden müssen.

Bei diesem Festziehen liegen die Köpfe 9 der Befestigungselemente unmittelbar auf dem von Elastomer freien Umfangsteil 10 der Trägerschiene 7 auf, während die Elastomerschicht 12 eine Abdichtung des Umfangsteils 11 der Trägerschiene 7 gegenüber dem Dachlenker 4 zur Folge hat. So ergibt sich ein bleibend fester Sitz des Dichtungsprofils 5 an dem Dachlenker 4.

Eine zum Inneren des Kabrioletts 1 hin gerichtete Abdecklippe 31 des Elastomerprofilstrangs 8 dient der optischen Abdeckung des Dachlenkers 4 und hat keine Dichtfunktion.

Fig. 2 zeigt einen Teil des Kabrioletts 1 mit geschlossenem Faltverdeck 2 und ebenso geschlossener Seitenscheibe 21. Vor dem öffnen der die Seitenscheibe 21 tragenden Fahrertür (Fig. 1) wird die Seitenscheibe 21 in an sich bekannter Weise durch eine sogenannte Kurzhubsteuerung selbsttätig um etwa 20 mm abgesenkt, bevor die Fahrertür geöffnet wird. Dies schafft die Möglichkeit, daß das obere Ende der Seitenscheibe 21 ohne Berührung der Dichtlippe 17 und damit ohne Beschädigung des Dichtungsprofils 5 aufgeschwenkt werden kann. Vorzugsweise bleibt die Seitenscheibe 21 in dieser abgesenkten Stellung, bis die Fahrertür wieder geschlossen ist. In diesem Augenblick wird durch die Kurzhubsteuerung die Seitenscheibe 21 wieder in die in Fig. 2 gezeigte oberste Betriebsstellung angehoben.

In allen Zeichnungsfiguren sind gleiche Teile mit gleichen Bezugszahlen versehen.

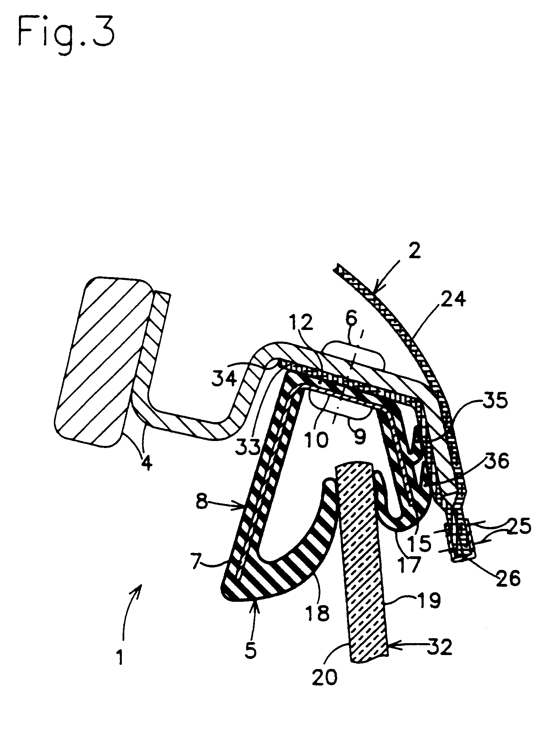

Fig. 3 zeigt die Abdichtung einer hinteren Seitenscheibe des Kabrioletts 1.

Ein umgeschlagener Randstreifen 33 der Dachplane 24 ist hier zwischen eine Montagefläche 34 des Dachlenkers 4 und die Elastomerschicht 12 eingelegt. Durch die als Niete ausgebildeten Befestigungselemente 6 werden das Dichtungsprofil 5 und der Randstreifen 33 fest an den Dachlenker 4 angepreßt.

Der Schenkel 15 trägt außen in diesem Fall zwei Dichtlippen 35 und 36 des Elastomerprofilstrangs 8. Die Dichtlippen 35, 36 besorgen die Abdichtung zu einem äußeren Bereich des Randstreifens 33. Statt der Niete 6 können in Fig. 3 auch andere Befestigungselemente, z.B. Schrauben, verwendet werden, die sich zur Nachjustage des Dichtungsprofils 5 ohne weiteres wieder lösen lassen.

Auch in Fig. 3 kann der Elastomerprofilstrang 8 aus Weichgummi mit einer Härte von 50 bis 70 Shore A bestehen.

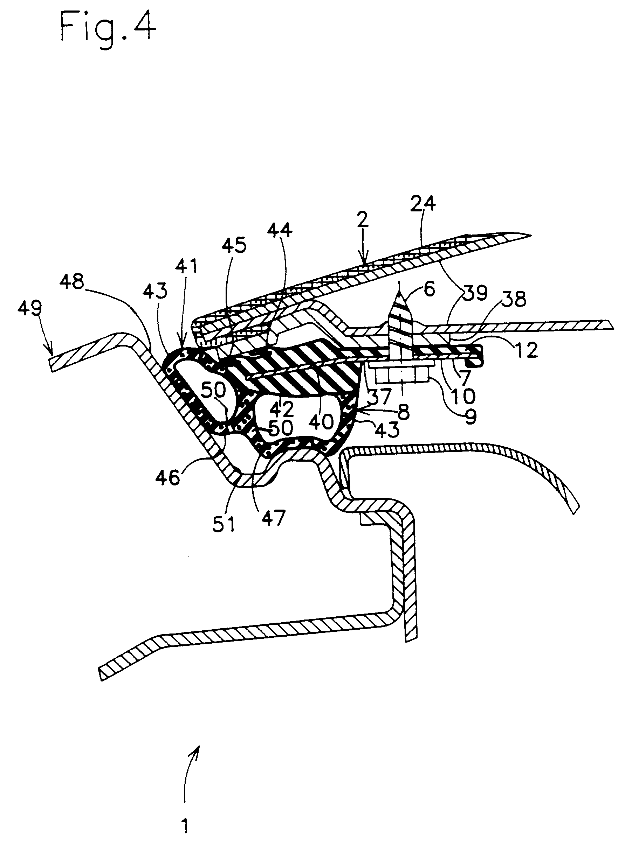

Fig. 4 zeigt die Situation am vorderen Dachrahmen des Kabrioletts 1.

Mit einem ersten Schenkel 37 der Trägerschiene 7 wirken die als Karosserieschrauben ausgebildeten Befestigungselemente 6 zusammen. Die Befestigungselemente 6 sind hier in ein Halteprofil 38 und einen Spriegel 39 des Faltverdecks 2 eingeschraubt. An einen zweiten Schenkel 40 der Trägerschiene 7 ist ein Außenteil 41 des Elastomerprofilstrangs 8 angespritzt. Der Außenteil weist einen an den zweiten Schenkel 40 angespritzten ersten Elastomerprofilstrang 42 aus Weichgummi und einen an den ersten Elastomerprofilstrang 42 angespritzten zweiten Elastomerprofilstrang 43 aus Moosgummi auf. Der erste Elastomerprofilstrang 42 übernimmt mit Dichtlippen 44 und 45 die ständige Abdichtung gegenüber dem Halteprofil 38 und damit gegenüber dem Faltverdeck 2. Der zweite Elastomerprofilstrang 43 bildet Schläuche 46 und 47, die bei geschlossenem Faltverdeck 2 gemäß Fig. 4 mit einer Gegenfläche 48 am Windschutzprofil 49 des Kabrioletts 1 dichtend zusammenwirken.

Ventilationsbohrungen 50 der Schläuche 46, 47 münden bei geschlossenem Faltverdeck 2 in eine in der Gegenfläche 48 ausgebildete Wasserrinne 51. Die Wasserrinne 51 führt in seitlicher Richtung Leckwasser ab, das gegebenenfalls zwischen dem Schlauch 46 und der Gegenfläche 48 hindurchgedrungen ist. Der Schlauch 47 dient weniger der Feuchtigkeitsabdichtung als vielmehr der Geräuschdämmung zum Innenraum des Kabrioletts 1 hin.

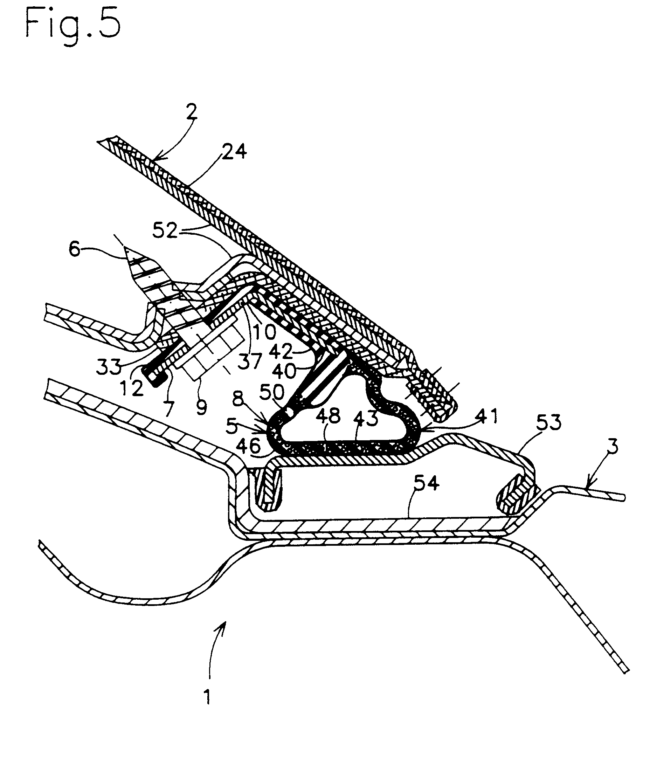

Fig. 5 zeigt ein Detail des hinteren Dachrahmens des Kabrioletts 1. Hier sind das Dichtungsprofil 5 und der umgeschlagene Randstreifen 33 der Dachplane 24 mit den als Karosserieschrauben ausgebildeten Befestigungselementen 6 an einem Spannbügel 52 des Faltverdecks 2 festgeschraubt.

Der Außenteil 41 weist wiederum den ersten Elastomerprofilstrang 42 aus Weichgummi und einen als Schlauch 46 ausgebildeten zweiten Elastomerprofilstrang 43 aus Moosgummi auf. Bei geschlossenem Faltverdeck 2 dichtet der Schlauch 46 gegenüber der Gegenflache 48 ab, wie dies in Fig. 5 gezeigt ist. Die Gegenfläche 48 ist Bestandteil einer Leiste 53, die auf einen Deckel 54 des Verdeckkastens 3 aufgesetzt ist und vorzugsweise aus eloxiertem Aluminium besteht.

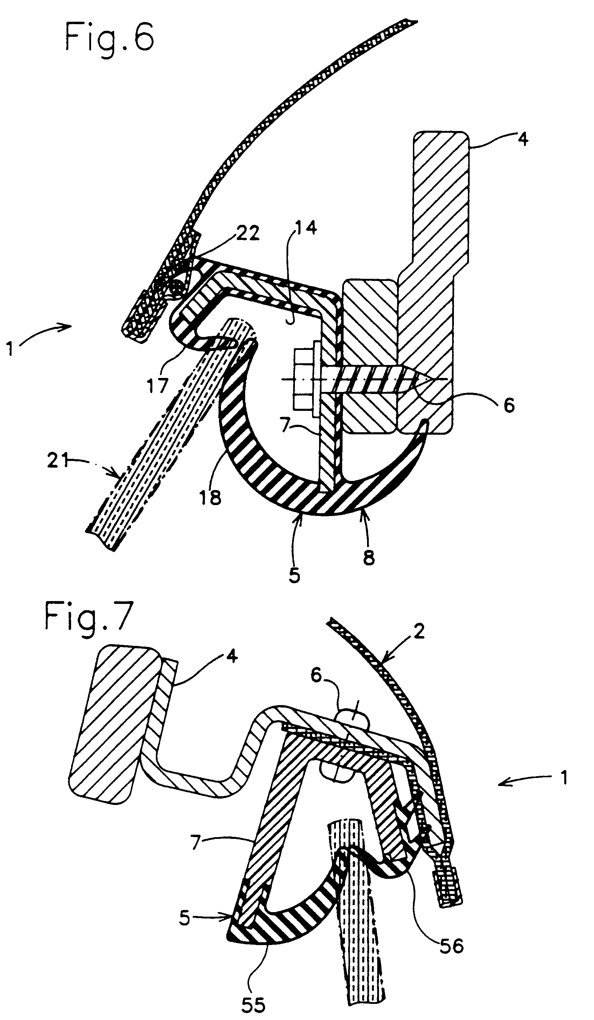

In Fig. 6 sind die Dichtlippen 17, 18 in ihrer Ruhelage gezeigt, in der sie aneinander anliegen und die konkave Seite 14 des Dichtungsprofils 5 schließen. Strichpunktiert ist zusätzlich die Seitenscheibe 21 in ihrer geschlossenen obersten Stellung angedeutet.

Die Ausführungsform nach Fig. 6 weicht von derjenigen in Fig. 2 dadurch ab, daß die Trägerschiene 7 in Fig. 6 aus einem thermoplastischen Kunststoff extrudiert wurde, bevor der Elastomerprofilstrang 8 zusammen mit der Trägerschiene 7 koextrudiert wurde. Außerdem dient als Befestigungselement 6 eine Karosserieschraube. In Fig. 6 ist auch die weitere Dichtlippe 22 in ihrer entspannten Lage gezeichnet, während die Betriebslage derjenigen in Fig. 2 entspricht.

Die Ausführungsform nach Fig. 7 weicht von derjenigen in Fig. 3 dadurch ab, daß die Trägerschiene 7 hier aus einem Kunststoff formgespritzt und anschließend ein erster Elastomerprofilstrang 55 und ein zweiter Elastomerprofilstrang 56 an die freien Enden der Trägerschiene 7 angespritzt wurden.

Auch hier sind alle Bereiche der Elastomerprofilstränge 55, 56 in ihrer entspannten Lage dargestellt.

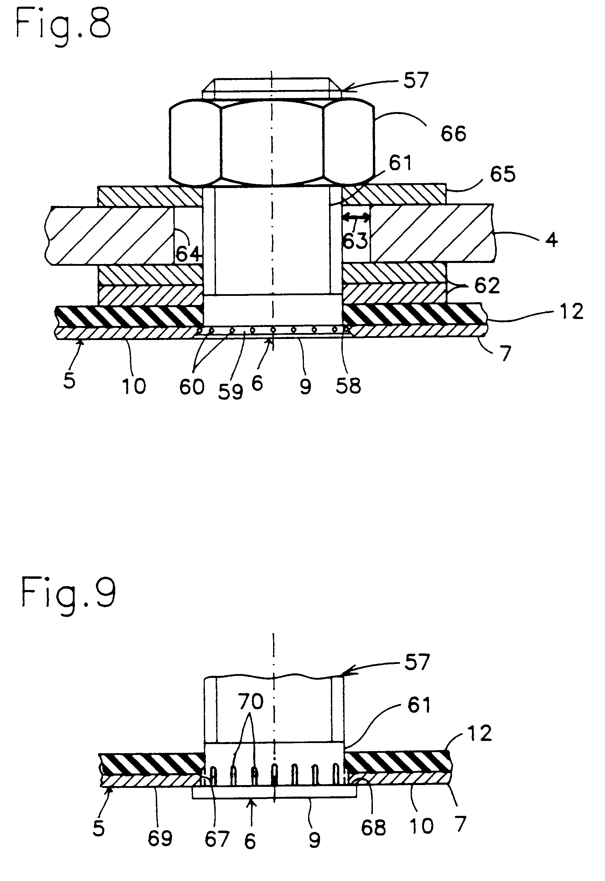

Gemäß Fig. 8 weist das Befestigungselement 6 einen Gewindebolzen 57 auf, dessen Kopf 9 als sich zum freien Ende erweiternder Kegelstumpf ausgebildet ist. Der Kopf 9 ist in eine komplementär geformte Durchbrechung 58 der Trägerschiene 7 eingepreßt. Ein Mantel 59 des Kegelstumpfs weist Profilierungen 60 auf, die aufgrund des Einpressens formschlüssig in eine Gegenfläche der Durchbrechung 58 eingreifen. Auf diese Weise sitzt der Kopf 9 verkantungssicher in der Durchbrechung 58 und ist außerdem besonders gut gegen Drehung relativ zu der Trägerschiene 7 gesichert.

Ein Schaft 61 des Gewindebolzens 57 erstreckt sich, ausgehend von dem Kopf 9, durch die Elastomerschicht 12 hindurch, sodann durch Ausgleichscheiben 62, ferner mit radialem Spiel 63 durch eine Durchbrechung 64 des als Dachlenker 4 ausgebildeten Anschlußteils und schließlich durch eine Scheibe 65. Auf das freie Ende des Gewindebolzens 57 ist eine Mutter 66 geschraubt, die das Dichtungsprofil 5 an dem Dachlenker 4 festlegt. Eine Justage des Dichtungsprofils 5 relativ zu dem Dachlenker 4 kann in zwei zueinander rechtwinkligen Achsen erfolgen. Die Justage in Richtung einer Längsachse des Gewindebolzens 57 erfolgt dadurch, daß, ausgehend von der in Fig. 8 gezeichneten Nullage, Ausgleichscheiben 62 entfernt oder hinzugefügt werden. Die Justage in radialer Richtung erfolgt dadurch, daß die Mutter 66 gelöst und das Dichtungsprofil 5 samt dem Befestigungselement 6 quer zu der Längsachse des Gewindebolzens 57 unter Ausnutzung des Spiels 63 verschoben wird, bis die richtige Position gefunden ist. In dieser Position wird die Mutter 66 wieder angezogen und damit das Dichtungsprofil 5 fixiert. Auch bei den höchsten zulässigen Zugkräften, die durch das Festschrauben der Mutter 66 auf den Gewindebolzen 57 ausgeübt werden, bleibt die feste Verbindung zwischen dem Kopf 9 und der Durchbrechung 58 in der Trägerschiene 7 erhalten. Gemäß Fig. 9 erstreckt sich der Schaft 61 des Gewindebolzens 57 durch eine im wesentlichen zylindrische Durchbrechung 67 der Trägerschiene 7 hindurch. Der Kopf 9 des Gewindebolzens 57 liegt mit einer die Durchbrechung 67 umgebenden Ringfläche 68 an einer Innenfläche 69 der Trägerschiene 7 an. Der Schaft 61 weist, angrenzend an den Kopf 9, Profilierungen 70 auf, die formschlüssig in eine Wand der Durchbrechung 67 eingreifen.

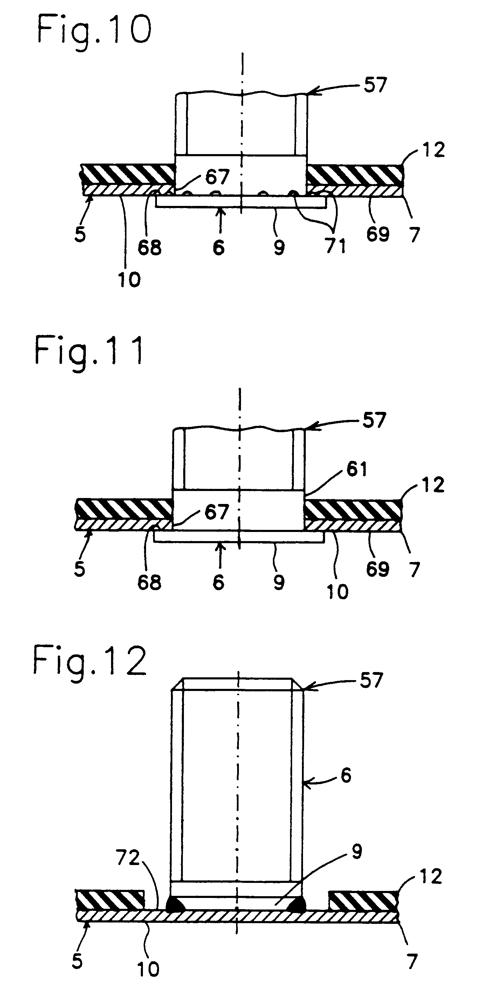

Gemäß Fig. 10 ist die Ringfläche mit über ihren Umfang verteilten Profilierungen 71 versehen, die formschlüssig in die Innenfläche 69 der Trägerschiene 7 eingreifen.

Der formschlüssige Eingriff der Profilierungen 70, 71 gemäß den Fig. 9 und 10 kann dadurch herbeigeführt werden, daß beim Einsetzen der Gewindebolzen 57 in die Durchbrechungen 67 eine entsprechend hohe axiale Druckkraft auf den Kopf 9 ausgeübt wird.

Gemäß Fig. 11 sitzt der Schaft 61 des Gewindebolzens 57 mit einem Preßsitz in der Durchbrechung 67 der Trägerschiene 7, so daß eine Drehung des Gewindebolzens 57 relativ zu der Trägerschiene 7 in allen Betriebszuständen ausgeschlossen ist. Zur präzisen axialen Positionierung des Gewindebolzens 57 liegt dieser wiederum mit seiner Ringfläche 68 an der Innenfläche 69 der Trägerschiene 7 an.

Bei dem Ausführungsbeispiel der Fig. 12 besteht die Trägerschiene 7 wie in den Ausführungsbeispielen nach den Fig. 8 bis 11 aus Blech, z.B. VA-Blech einer Dicke von 0,6 mm. In Fig. 12 weist jedoch die Trägerschiene 7 in der Verlängerung des Gewindebolzens 57 keine Durchbrechung auf. Vielmehr ist der Gewindebolzen 57 mit seinem kegelstumpfförmigen zugespitzten Kopf 9 unmittelbar an die Trägerschiene 7 angeschweißt. Vorzugsweise verwendet man hier eine Stumpfschweißung. Vor der Schweißung wird die gegebenenfalls vorhandene Elastomerschicht 12 im Bereich der Schweißstelle entfernt. Alternativ kann schon bei der Koextrusion des Dichtungsprofils 5 ein dem Umfangsteil 10 gegenüberliegender, äußerer Umfangsteil 72 der Trägerschiene 7 frei von der Elastomerschicht 12 gelassen werden.

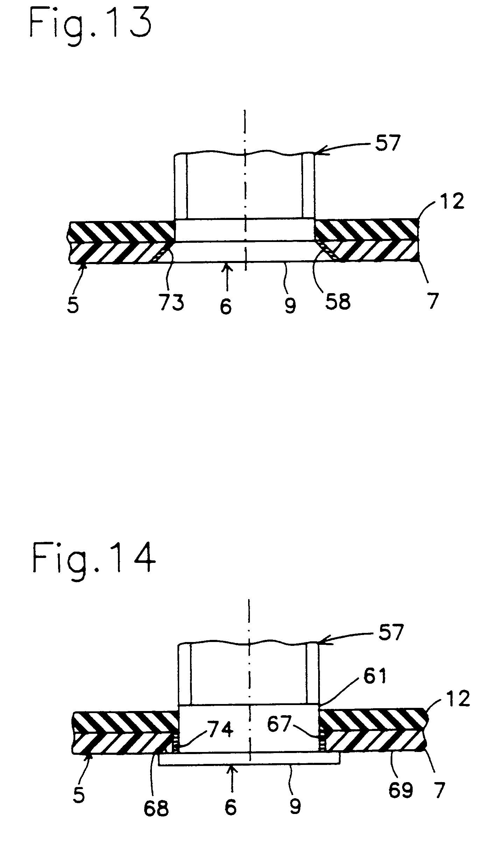

Bei den Ausführungsbeispielen nach Fig. 13 und 14 besteht der Gewindebolzen 57 aus Kunststoff, während der Gewindebolzen 57 in den Fig. 8 bis 12 vorzugsweise aus Metall besteht.

In den Fig. 13 und 14 ist auch die Trägerschiene 7 entsprechend den Fig. 6 und 7 aus Kunststoff hergestellt.

In Fig. 13 ist der Kopf 9 des Gewindebolzens 57 entsprechend Fig. 8 zum freien Ende hin kegelstumpfförmig erweitert. Der Kopf 9 ist über eine Kleberschicht 73 in der Durchbrechung 58 der Trägerschiene 7 befestigt. Diese Verklebung hält allen im Betrieb auftretenden Belastungen Stand.

In Fig. 14 ist der Schaft 61 des Gewindebolzens 57 mit einer Kleberschicht 74 in die zylindrische Durchbrechung 67 eingeklebt. Bei Bedarf kann eine zusätzliche Verklebung zwischen der Ringflache 68 des Kopfes 9 und der Innenfläche 69 der Trägerschiene 7 erfolgen.

## Patentansprüche

1. Verfahren zur Herstellung eines Dichtungsprofils (5) für ein Faltverdeck (2) eines Kabrioletts (1),
wobei das Dichtungsprofil (5) eine formstabile Trägerschiene (7) und wenigstens einen an die Trägerschiene (7) angespritzten und vulkanisierten Elastomerprofilstrang (55, 56) aufweist,
und wobei das Dichtungsprofil (5) dreidimensional geformt ist, gekennzeichnet durch folgende Schritte:
(a) Die Trägerschiene (7) wird aus Kunststoff in einem ersten Formwerkzeug gespritzt und dabei in ihre im wesentlichen endgültige dreidimensionale Form gebracht,
(b) in einem zweiten Formwerkzeug wird an die Trägerschiene (7) der wenigstens eine Elastomerprofilstrang (55, 56) angespritzt und vulkanisiert.

2. Verfahren zur Herstellung eines Dichtungsprofils (5) für ein Faltverdeck (2) eines Kabrioletts (1),
wobei das Dichtungsprofil (5) eine formstabile Trägerschiene (7) und wenigstens einen mit der Trägerschiene (7) verbundenen Elastomerprofilstrang (8; 42, 43; 55, 56) aufweist,
und wobei das Dichtungsprofil (5) dreidimensional geformt und mit Befestigungselementen (6) an einem Anschlußteil (4) des Faltverdecks (2) festgelegt wird,
dadurch gekennzeichnet, daß an der Trägerschiene (7) des Dichtungsprofils (5) wenigstens zwei Gewindebolzen (57) der Befestigungselemente (6) im Abstand voneinander befestigt werden,
und daß bei der Montage des Dichtungsprofils (5) jeder Gewindebolzen (57) durch eine Durchbrechung (64) des zugehörigen Anschlußteils (4) hindurchgesteckt und relativ zu dem Anschlußteil (4) axial festgelegt wird.

3. Dichtungsprofil (5) für ein Faltverdeck (2) eines Kabrioletts (1), wobei das Dichtungsprofil (5) eine formstabile Trägerschiene (7) und wenigstens einen mit der Trägerschiene (7) verbundenen Elastomerprofilstrang (8; 42, 43; 55, 56) aufweist,
wobei das Dichtungsprofil (5) dreidimensional geformt und an Anschlußteilen (4; 39; 52) des Faltverdecks (2) mit Befestigungselementen (6) festlegbar ist,
und wobei die Trägerschiene (7), zumindest auf einem Teil ihres Umfangs, mit dem wenigstens einen Elastomerprofilstrang (8; 42, 43; 55, 56) umspritzt ist,
dadurch gekennzeichnet, daß mit einem ersten Schenkel (37) der Trägerschiene (7) die Befestigungselemente (6) zusammenwirken,
und daß ein an einen zweiten Schenkel (40) der Trägerschiene (7) angespritzter Außenteil (41) des Elastomerprofilstrangs (8) einerseits (42, 44, 45) ständig mit dem Faltverdeck (2) und andererseits (41, 46, 47) bei geschlossenem Faltverdeck (2) mit einer Gegenfläche (48) des Kabrioletts (1) dichtend zusammenwirkt.

4. Dichtungsprofil nach Anspruch 3,
dadurch gekennzeichnet, daß der Außenteil (41) einen an den zweiten Schenkel (40) angespritzten ersten Elastomerprofilstrang (42) aus Weichgummi und wenigstens einen an den ersten Elastomerprofilstrang (42) angespritzten, mit der Gegenfläche (48) dichtend zusammenwirkenden zweiten Elastomerprofilstrang (43, 46, 47) aus Moosgummi aufweist.

5. Dichtungsprofil nach Anspruch 3 oder 4,
dadurch gekennzeichnet, daß die Trägerschiene (7) aus Blech besteht.

6. Dichtungsprofil nach Anspruch 3 oder 4,
dadurch gekennzeichnet, daß die Trägerschiene (7) aus einem thermoplastischen Kunststoff extrudiert ist.

7. Dichtungsprofil nach Anspruch 3 oder 4,
dadurch gekennzeichnet, daß die Trägerschiene (7) aus einem Kunststoff formgespritzt ist,
und daß der wenigstens eine Elastomerprofilstrang (55, 56) an die formgespritzte Trägerschiene (7) angespritzt ist.

8. Dichtungsprofil (5) für ein Faltverdeck (2) eines Kabrioletts (1), wobei das Dichtungsprofil (5) eine formstabile Trägerschiene (7) und wenigstens einen mit der Trägerschiene (7) verbundenen Elastomerprofilstrang (8; 42, 43; 55, 56) aufweist,
wobei das Dichtungsprofil (5) dreidimensional geformt und an Anschlußteilen (4; 39; 52) des Faltverdecks (2) mit Befestigungselementen (6) festlegbar ist,
und wobei die Trägerschiene (7), zumindest auf einem Teil ihres Umfangs, mit dem wenigstens einen Elastomerprofilstrang (8; 42, 43; 55, 56) umspritzt ist, insbesondere nach einem der Ansprüche 3 bis 7, dadurch gekennzeichnet, daß an der Trägerschiene (7) des Dichtungsprofils (5) wenigstens zwei Gewindebolzen (57) der Befestigungselemente (6) im Abstand voneinander befestigt sind,
und daß bei der Montage des Dichtungsprofils (5) jeder Gewindebolzen (57) durch eine Durchbrechung (64) des zugehörigen Anschlußteils (4) hindurchsteckbar und relativ zu dem Anschlußteil (4) axial festlegbar ist.

9. Dichtungsprofil nach Anspruch 8,
dadurch gekennzeichnet, daß ein Kopf (9) jedes Gewindebolzens (57) als sich zum freien Ende erweiternder Kegelstumpf ausgebildet und in einer komplementär geformten Durchbrechung (58) der Trägerschiene (7) angeordnet ist.

10. Dichtungsprofil nach Anspruch 9,
dadurch gekennzeichnet, daß ein Mantel (59) des Kegelstumpfs Profilierungen (60) aufweist,
und daß die Profilierungen (60) formschlüssig in eine Gegenfläche der Durchbrechung (58) eingreifen.

11. Dichtungsprofil nach Anspruch 8,
dadurch gekennzeichnet, daß jeder Gewindebolzen (57) sich durch eine Druchbrechung (67) der Trägerschiene (7) hindurch erstreckt, und daß ein Kopf (9) jedes Gewindebolzens (57) mit einer die Durchbrechung (67) umgebenden Ringfläche (68) an einer Innenfläche (69) der Trägerschiene (7) anliegt.

12. Dichtungsprofil nach Anspruch 11,
dadurch gekennzeichnet, daß ein Schaft (61) des Gewindebolzens (57) angrenzend an den Kopf (9) Profilierungen (70) aufweist,
und daß die Profilierungen (70) formschlüssig in eine Wand der Durchbrechung (67) eingreifen.

13. Dichtungsprofil nach Anspruch 11 oder 12,
dadurch gekennzeichnet, daß die Ringfläche (68) Profilierungen (71) aufweist,
und daß die Profilierungen (71) formschlüssig in die Innenfläche (69) der Trägerschiene (7) eingreifen.

14. Dichtungsprofil nach einem der Ansprüche 9 bis 13,
dadurch gekennzeichnet, daß der Gewindebolzen (57) mit einem Preßsitz in der Durchbrechung (67) der Trägerschiene (7) sitzt.

15. Dichtungsprofil nach einem der Ansprüche 9 bis 14,
dadurch gekennzeichnet, daß der Kopf (9) und/oder ein Schaft (61) des Gewindebolzens (57) mit einer Innenfläche (69) der Trägerschiene (7) und/oder mit einer Wand der Durchbrechung (67) verklebt ist.

16. Dichtungsprofil nach einem der Ansprüche 9 bis 15,
dadurch gekennzeichnet, daß der Gewindebolzen (57) aus Kunststoff besteht.

17. Dichtungsprofil nach einem der Ansprüche 9 bis 15,
dadurch gekennzeichnet, daß der Gewindebolzen (57) aus Metall besteht.

18. Dichtungsprofil nach Anspruch 17,
dadurch gekennzeichnet, daß der Gewindebolzen (57) an die metallische Trägerschiene (7) angeschweißt ist.

## Claims

1. Method for the manufacture of a sealing profile (5) for a folding soft top (2) of a convertible (1),
wherein the sealing profile (5) comprises an inherently stable carrier rail (7) and at least one elastomeric profile strip (55, 56) injected on to and vulcanized to the carrier rail (7),
and wherein the sealing profile (5) is formed to be three-dimensional,
characterised by the following steps:
(a) the carrier rail (7) is injection moulded from plastics material in a first moulding tool and is thus brought to its substantially final three-dimensional shape,
(b) in a second moulding tool the at least one elastomeric profile strip (55, 56) is injected on to and vulcanized to the carrier rail (7).

2. Method for the manufacture of a sealing profile (5) for a folding soft top (2) of a convertible (1),
wherein the sealing profile (5) comprises an inherently stable carrier rail (7) and at least one elastomeric profile strip (8; 42, 43; 55, 56) connected to the carrier rail (7),
and wherein the sealing profile (5) is formed to be three-dimensional and is secured by fixing members (6) to a mounting part (4) of the folding soft top (2), characterised in that at least two threaded bolts (57) of the fixing members (6) are fixed spaced from one another to the carrier rail (7) of the sealing profile (5), and in the fitting of the sealing profile (5) each threaded bolt (57) is pushed through a hole (64) of the associated mounting part (4) and is fixed axially relative to the mounting part (4).

3. Sealing profile (5) for a folding soft top (2) of a convertible (1),
wherein the sealing profile (5) comprises an inherently stable carrier rail (7) and at least one elastomeric profile strip (8; 42, 43; 55, 56) connected to the carrier rail (7),
wherein the sealing profile (5) is formed to be three-dimensional and is fastenable to mounting parts (4; 39; 52) of the folding soft top (2) by means of fixing members (6),
and wherein the carrier rail (7), at least on a part of its periphery, is injection-coated with said at least one elastomeric profile strip (8; 42, 43; 55, 56),
characterised in that the fixing members (6) cooperate with a first limb (37) of the carrier rail (7),
and an outer part (41) of the elastomeric profile strip (8) injected on to a second limb (40) of the carrier rail (7) cooperates sealingly on the one hand (42, 44, 45) permanently with the folding soft top (2) and on the other hand (41, 46, 47) with an opposing contact surface (48) of the convertible (1) when the folding soft top (2) is closed.

4. Sealing profile according to claim 3,
characterised in that the outer part (41) comprises a first elastomeric profile strip (42) of soft rubber injected on to the second limb (40) and at least one second elastomeric profile strip (43, 46, 47) of foam rubber cooperating sealingly with the opposing contact surface (48) and injected on to the first elastomeric profile strip (42).

5. Sealing profile according to claim 3 or 4,
characterised in that the carrier rail (7) is of sheet metal.

6. Sealing profile according to claim 3 or 4,
characterised in that the carrier rail (7) is extruded from a thermoplastic plastics material.

7. Sealing profile according to claim 3 or 4,
characterised in that the carrier rail (7) is injection moulded from a plastics material,
and the at least one elastomeric profile strip (55, 56) is injected on to the injection moulded carrier rail (7).

8. Sealing profile (5) for a folding soft top (2) of a convertible (1),
wherein the sealing profile (5) comprises an inherently stable carrier rail (7) and at least one elastomeric profile strip (8; 42, 43; 55, 56) connected to the carrier rail (7),
wherein the sealing profile (5) is formed to be three-dimensional and is fastenable to mounting parts (4; 39; 52) of the folding soft top (2) by means of fixing members (6),
and wherein the carrier rail (7), at least on a part of its periphery, is injection-coated with said at least one elastomeric profile strip (8; 42, 43; 55, 56),
particularly according to one of claims 3 to 7,
characterised in that to the carrier rail (7) of the sealing profile (5) are fixed at least two spaced threaded bolts (57) of the fixing members (6),
and in the mounting of the sealing profile (5) each threaded bolt (57) is arranged to be pushed through a hole (64) in the associated mounting part (4) and is axially securable relative to the mounting part (4).

9. Sealing profile according to claim 8,
characterised in that a head (9) of each threaded bolt (57) is frusto-conical, broadening towards the free end, and is arranged in a complementarily shaped hole (58) in the carrier rail (7).

10. Sealing profile according to claim 9,
characterised in that a sleeve (59) of the frusto-conical head has profilings (60),
and the profilings (60) grip in a shape-locking manner in an opposing contact surface of the hole (58).

11. Sealing profile according to claim 8,
characterised in that each threaded bolt (57) extends through a hole (67) in the carrier rail (7),
and a head (9) of each threaded bolt (57) is in contact with an annular surface (68) which surrounds the hole (67) and which is on an internal face (69) of the carrier rail (7).

12. Sealing profile according to claim 11,
characterised in that a stem (61) of the threaded bolt (57) has profilings (70) immediately adjoining the head (9),
and the profilings (70) engage in a shape-locking manner in a wall of the hole (67).

13. Sealing profile according to claim 11 or 12,
characterised in that the annular surface (68) has profilings (71),
and the profilings (71) engage in a shape-locking manner in the internal face (69) of the carrier rail (7).

14. Sealing profile according to one of claims 9 to 13, characterised in that the threaded bolts (57) are seated with a press fit in the holes (67) in the carrier rail (7).

15. Sealing profile according to one of claims 9 to 14, characterised in that the head (9) and/or a stem (61) of the threaded bolt (57) is adhesively secured to an internal face (69) of the carrier rail (7) and/or to a wall of the hole (67).

16. Sealing profile according to one of claims 9 to 15, characterised in that the threaded bolts (57) are of plastics material.

17. Sealing profile according to one of claims 9 to 15, characterised in that the threaded bolts (57) are of metal.

18. Sealing profile according to claim 17,
characterised in that the threaded bolts (57) are welded to the metallic carrier rail (7).

## Revendications

1. Procédé de fabrication d'un profilé d'étanchéité (5) destiné à une capote repliable (2) d'un cabriolet (1),
le profilé d'étanchéité (5) présentant un rail support (7) rigide par sa forme et au moins une bande de profilé en élastomère (55, 56) moulée par extrusion et vulcanisée sur le rail support (7),
et le profilé d'étanchéité (5) étant formé en trois dimensions,
caractérisé par les étapes suivantes:
(a) le rail support (7) est, dans un premier outil de formage, extrudé à partir de matière plastique et est ainsi mis sous sa forme tridimensionnelle essentiellement définitive,
(b) dans un deuxième outil de formage, la bande de profilé en élastomère (55, 56), au moins au nombre d'une, est appliquée par extrusion et vulcanisée sur le rail support (7).

2. Procédé de fabrication d'un profilé d'étanchéité (5) destiné à une capote repliable (2) d'un cabriolet (1),
le profilé d'étanchéité (5) présentant un rail support (7) rigide par sa forme et au moins une bande de profilé en élastomère (8; 42, 43; 55, 56) reliée au rail support (7),
et le profilé d'étanchéité (5) étant formé en trois dimensions et étant fixé par des éléments de fixation (6) sur une pièce de raccordement (4) de la capote repliable (2),
caractérisé en ce que, sur le rail support (7) du profilé d'étanchéité (5), sont fixés, à une certaine distance entre eux, au moins deux boulons filetés (57) des éléments de fixation (6),
et en ce que, lors du montage du profilé d'étanchéité (5), chaque boulon fileté (57) est passé au travers d'un percement (64) de la pièce de raccordement (4) associée et est bloqué axialement par rapport à la pièce de raccordement (4).

3. Profilé d'étanchéité (5) destiné à une capote repliable (2) d'un cabriolet (1),
le profilé d'étanchéité (5) présentant un rail support (7) rigide par sa forme et au moins une bande de profilé en élastomère (8; 42, 43; 55, 56) reliée au rail support (7),
le profilé d'étanchéité (5) étant formé en trois dimensions et pouvant être bloqué avec des éléments de fixation (6) sur des pièces de raccordement (4; 39; 52) de la capote repliable (2),
et le rail support (7), au moins sur une partie de son contour, étant enrobé avec au moins une bande de profilé en élastomère (8; 42, 43; 55, 56),
caractérisé en ce que les éléments de fixation (6) agissent en coordination avec une première aile (37) du rail support (7),
et en ce qu'une partie extérieure (41) de la bande de profilé en élastomère (8), appliquée par extrusion sur une deuxième aile (40) du rail support (7), agit, en faisant étanchéité, en coordination, d'un côté (42, 44, 45), constamment avec la capote repliable (2), et, de l'autre côté (41, 46, 47), lorsque la capote repliable (2) est fermée, avec une contre-surface (48) du cabriolet (1).

4. Profilé d'étanchéité suivant la revendication 3, caractérisé en ce que la partie extérieure (41) présente une première bande de profilé en élastomère (42) en caoutchouc mou et au moins une deuxième bande de profilé en élastomère (43, 46, 47) en mousse de caoutchouc, appliquée par extrusion sur la première bande de profilé en élastomère (42) et agissant, en faisant étanchéité, en coordination avec la contre-surface (48).

5. Profilé d'étanchéité suivant la revendication 3 ou la revendication 4, caractérisé en ce que le rail support (7) est constitué de tôle.

6. Profilé d'étanchéité suivant la revendication 3 ou la revendication 4, caractérisé en ce que le rail support (7) est extrudé à partir d'une matière plastique thermoplastique.

7. Profilé d'étanchéité suivant la revendication 3 ou la revendication 4, caractérisé en ce que le rail support (7) est moulé par extrusion d'une matière plastique, et en ce que ladite au moins une bande de profilé en élastomère (55, 56) est formée par extrusion sur le rail support (7) moulé lui-même par extrusion.

8. Profilé d'étanchéité (5) destiné à une capote repliable (2) d'un cabriolet (1),
le profilé d'étanchéité (5) présentant un rail support (7) rigide par sa forme et au moins une bande de profilé en élastomère (8; 42, 43; 55, 56) reliée au rail support (7),
le profilé d'étanchéité (5) étant formé en trois dimensions et pouvant être bloqué par des éléments de fixation (6) sur une pièce de raccordement (4; 39; 52) de la capote repliable (2),
et le rail support (7), au moins sur une partie de son contour, étant enrobé avec au moins une bande de profilé en élastomère (8; 42, 43; 55, 56), en particulier suivant l'une des revendications 3 à 7,
caractérisé en ce que, sur le rail support (7) du profilé d'étanchéité (5), sont fixés, à une certaine distance entre eux, au moins deux boulons filetés (57) des éléments de fixation (6),
et en ce que, lors du montage de du profilé d'étanchéité (5), chaque boulon fileté (57) peut passer au travers d'un percement (64) de la pièce de raccordement (4) correspondante et peut être bloqué axialement par rapport à la pièce de raccordement (4).

9. Profilé d'étanchéité suivant la revendication 8, caractérisé en ce qu'une tête (9) de chaque boulon fileté (57) est réalisée sous la forme d'un tronc de cône s'élargissant vers l'extrémité libre et est disposée dans un percement (58) du rail support (7), de forme complémentaire.

10. Profilé d'étanchéité suivant la revendication 9, caractérisé en ce qu'une enveloppe (59) du tronc de cône présente des profilages (60),
et en ce que les profilages (60) font prise, par conjugaison de formes, dans une contre-surface du percement (58).

11. Profilé d'étanchéité suivant la revendication 8, caractérisé en ce que chaque boulon fileté (57) traverse un percement (67) du rail support (7),
et en ce qu'une tête (9) de chaque boulon fileté (57) s'applique, avec une surface annulaire (68) entourant le percement (67), contre une surface intérieure (69) du rail support (7).

12. Profilé d'étanchéité suivant la revendication 11, caractérisé en ce qu'une tige (61) du boulon fileté (57) présente, au voisinage de la tête (9), des profilages (70),
et en ce que les profilages (70) font prise, par conjugaison de formess, dans une paroi du percement (67).

13. Profilé d'étanchéité suivant la revendication 11 ou la revendication 12, caractérisé en ce que la surface annulaire (68) présente des profilages (71),
et en ce que les profilages (71) font prise, par conjugaison de formess, dans la surface intérieure (69) du rail support (7).

14. Profilé d'étanchéité suivant l'une des revendications 9 à 13 caractérisé en ce que le boulon fileté (57) repose, avec une liaison par pression, dans le percement (67) du rail support (7).

15. Profilé d'étanchéité suivant l'une des revendications 9 à 14 caractérisé en ce que la tête (9) et/ou une tige (61) du boulon fileté (57) sont collées sur une surface intérieure (69) du rail support (7) et/ou sur une paroi du percement (67).

16. Profilé d'étanchéité suivant l'une des revendications 9 à 15 caractérisé en ce que le boulon fileté (57) est constitué de matière plastique.

17. Profilé d'étanchéité suivant l'une des revendications 9 à 15 caractérisé en ce que le boulon fileté (57) est constitué de métal.

18. Profilé d'étanchéité suivant la revendication 17, caractérisé en ce que le boulon fileté (57) est soudé sur le rail support (7) métallique.
